(19) **Europäisches Patentamt**
**European Patent Office**
**Office européen des brevets**

(11) **EP 3 940 291 B1**

(12) **EUROPEAN PATENT SPECIFICATION**

(45) Date of publication and mention
of the grant of the patent:
**01.10.2025  Bulletin 2025/40**

(21) Application number: **20796215.0**

(22) Date of filing: **20.04.2020**

(51) International Patent Classification (IPC):
$G02B\ 1/04$ ^(2006.01)     $G02B\ 5/18$ ^(2006.01)
$G02B\ 6/00$ ^(2006.01)     $C08G\ 18/16$ ^(2006.01)
$C08G\ 18/38$ ^(2006.01)    $B29D\ 11/00$ ^(2006.01)
$C08G\ 18/75$ ^(2006.01)    $F21V\ 8/00$ ^(2006.01)

(52) Cooperative Patent Classification (CPC):
(C-Sets available)
**C08G 18/3876; B29D 11/00663; B29D 11/00769;
C08G 18/168; C08G 18/755; G02B 1/04;
G02B 5/1847; G02B 5/1866; G02B 6/0036;
G02B 6/0065**                                    (Cont.)

(86) International application number:
**PCT/KR2020/005194**

(87) International publication number:
**WO 2020/218784 (29.10.2020 Gazette 2020/44)**

(54) **METHOD FOR MANUFACTURING A DIFFRACTION LIGHT GUIDE PLATE**

VERFAHREN ZUR HERSTELLUNG VON EINER BEUGUNGSLICHTLEITERPLATTE

PROCÉDÉ DE FABRICATION D'UNE PLAQUE DE GUIDAGE DE LUMIÈRE DE DIFFRACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2019  KR 20190048581
16.04.2020  KR 20200046117**

(43) Date of publication of application:
**19.01.2022  Bulletin 2022/03**

(73) Proprietor: **LG CHEM, LTD.
Yeongdeungpo-gu,
Seoul 07336 (KR)**

(72) Inventors:
• **KIM, Jaeyoung**
**Daejeon 34122 (KR)**
• **KIM, Youngsuk**
**Daejeon 34122 (KR)**
• **JUNG, Soonhwa**
**Daejeon 34122 (KR)**
• **CHANG, Yeongrae**
**Daejeon 34122 (KR)**

(74) Representative: **Hoffmann Eitle
Patent- und Rechtsanwälte PartmbB
Arabellastraße 30
81925 München (DE)**

(56) References cited:
EP-B1- 2 810 972         JP-A- 2006 106 361
JP-A- 2012 068 376       JP-A- 2017 138 597
JP-A- S60 225 719        JP-B2- 4 734 473
KR-A- 20120 101 304      KR-A- 20150 022 665
KR-A- 20190 029 489      KR-B1- 101 096 368
US-A1- 2011 019 874      US-A1- 2016 297 107

• LYNDON S STEPHENS ET AL: "Mechanical
Property Evaluation and Failure Analysis of
Cantilevered LIGA Nickel Microposts",
JOURNAL OF MICROELECTROMECHANICAL
SYSTEMS, IEEE SERVICE CENTER, US, vol. 10,
no. 3, 1 September 2001 (2001-09-01), pages 347 -
359, XP011034660, ISSN: 1057-7157, DOI:
10.1109/84.946780

• CHO ET AL: "Characterization of Young's modulus of silicon versus temperature using a "beam deflection" method with a four-point bending fixture", CURRENT APPLIED PHYSICS, ELSEVIER, AMSTERDAM, NL, vol. 9, no. 2, 15 May 2008 (2008-05-15), pages 538 - 545, XP026034334, ISSN: 1567-1739, [retrieved on 20090301], DOI: 10.1016/J.CAP.2008.03.024

(52) Cooperative Patent Classification (CPC): (Cont.)

C-Sets
G02B 1/04, C08L 75/04, C08L 81/00

**Description**

**FIELD OF THE INVENTION**

The present disclosure relates to a method for manufacturing the diffraction light guide plate.

**BACKGROUND OF THE INVENTION**

Recently, a device for providing a 3D image to a user by using a virtual reality device and an augmented reality device has been developed.

The virtual reality device or the augmented reality device may form a diffraction light guide pattern on a lens such as common glasses to make the desired image visible to a user.

In general, a lens for a virtual reality device or an augmented reality device uses glass having a high refractive index. Glass may have a high refractive index, light transmittance, flatness and strength, but can cause fatal damage to the user's eyeball when broken. Also, since glass has high density and heavy weight, there is uncomfortable to wear for a long period of time.

Accordingly, it is necessary to study lenses that have high light transmittance and high refractive index, and further are lighter and relatively safe when broken so that they can be used in virtual reality devices or augmented reality devices.

In the case of a high-refractive plastic for replacing a glass, it is very lightweight and can realize various colors, but there is a problem that physical properties such as surface flatness and thickness uniformity are far inferior to those of conventional glasses.

Furthermore, during the imprinting process of forming the diffraction grating, the strength is low and shape deformation occurs, or if a large amount of inorganic particles are used for realizing high refraction, not only it induces haze in the final product, but there is also the problem that it is difficult to secure high pencil hardness due to poor interfacial adhesion between the high-refractive plastic substrate and the diffraction grating. Thus, research is needed to improve these problems.

US 2011/0019874 A1 relates to a device and a method for determinating a gaze direction. From this document, a light guide plate being of glass or polymer is known, in which gratings can be embossed. JP 2012-68376 A relates to an optical device in which a fine structure is formed on a substrate surface by transfer molding such as nanoimprint.

**SUMMARY OF THE INVENTION**

**TECHNICAL PROBLEM**

It is an object of the present disclosure to provide a method for manufacturing by a simple process a diffraction light guide plate that has excellent thickness uniformity and flatness, and at the same time, has low haze and excellent mechanical properties such as pencil hardness and strength.

**TECHNICAL SOLUTION**

The present invention is defined by the independent claim. Preferred embodiments are defined by the dependent claims. Further aspects are provided for facilitating the understanding of the invention.

Hereinafter, a diffraction light guide plate and a method for manufacturing the diffraction light guide plate according to specific aspects of the present disclosure will be described in more detail.

Throughout the specification, when a part is referred to as "including" a certain component, it means that it can further include other components, without excluding the other components, unless otherwise stated.

Further, when an element is referred to as being "on" or "above" another element, it includes both a case that the one element is adjacent to the another element and a case that any other element exists between these two elements

Further, the term "a step of doing something" or "a step of something" used herein does not mean "a step for something".

According to one aspect of the present disclosure, not part of the claimed invention, a diffraction light guide plate can be provided including an optical layer in which a diffraction grating pattern is formed on one surface thereof, wherein the diffraction grating pattern is formed in an integrated structure without an interface on one surface of the optical layer, and wherein the difference in refractive index between the diffraction grating pattern and one surface of the optical layer is 0.01 or less.

The present inventors have found that in the optical layer in which the diffraction grating pattern included in the diffraction light guide plate is formed on one surface thereof, when the diffraction grating pattern is formed in an integrated structure without an interface on one surface of the optical layer, the diffraction light guide plate has excellent mechanical properties such as pencil hardness and strength. In addition, since there is almost no difference in refractive index between the diffraction grating pattern and one surface of the optical layer, not only there is no problem such as reduction of transmittance or generation of haze caused by the interface formed between layers having different refractive indices, but also it increases the efficiency with which light incident on the diffractive light guide (i.e., light guided by light) is totally reflected in the diffractive light guide plate, thereby displaying a high-resolution image with higher brightness when used for a virtual reality device.

In the case of a conventional diffraction light guide plate, a light guide plate having a pattern part was manufactured through a process of applying a resin composition for imprinting on a plastic (or glass) substrate, drying it to form a resin layer, and then imprinting a template in which a diffraction grating pattern is engraved on the resin layer. However, the diffraction light guide plate manufactured by this method has an interface existing between the plastic substrate and the pattern part, and has poor interfacial adhesive force, and thus, it was difficult to secure mechanical properties such as pencil hardness. However, in the diffraction light guide plate according to the one aspect, the diffraction grating pattern is formed in an integrated structure without an interface on one surface of the optical layer, thereby exhibiting excellent mechanical properties such as high pencil hardness and strength.

Further, the diffraction light guide plate has a high refractive index similar to that of glass and thus, can be used as a diffraction light guide lens of a wearable device. Consequently, it is possible to prevent problems caused by breakage of the conventional glass and problems that it is difficult to wear for a long period of time due to the heavy weight of glass. Furthermore, the diffraction light guide plate can realize a high refractive index even without additionally including inorganic particles, and it does not generate haze due to inorganic particles and has low haze, so it has high visibility. Further, the diffraction light guide plate may be manufactured by a method for manufacturing a diffractive light guide plate which will be described later, and thus can have excellent thickness uniformity and flatness.

The difference in refractive index between the diffraction grating pattern and one surface of the optical layer may be 0.01 or less, 0.05 or less, 0.001 or less, or 0.001 to 0.0001. When the difference in refractive index between the diffraction grating pattern and one surface of the optical layer exceeds 0.01, it may cause problems such as a decrease in transmittance resulting from the interface and the occurrence of haze. Therefore, because the difference in refractive index between the diffraction grating pattern and one surface of the optical layer satisfies the above range, not only there are no problems such as a decrease in transmittance resulting from the interface and the occurrence of haze, but also when the total reflection efficiency of the light guided by a light is increased and this is used for a virtual reality device or the like, it can display an image with higher brightness.

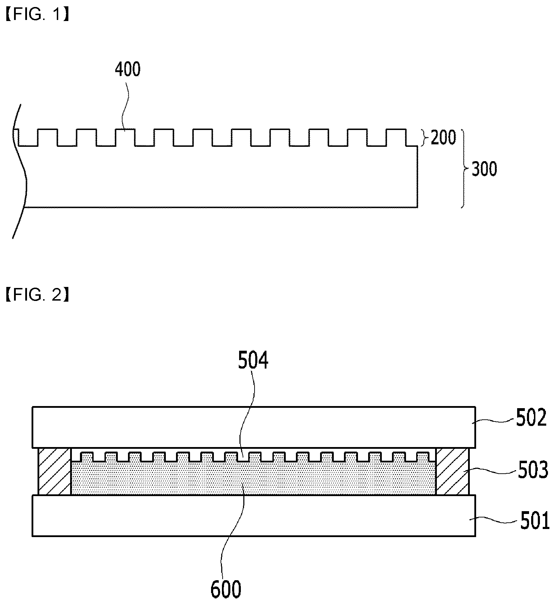

FIG. 1 is a diagram schematically showing a cross section of an optical layer included in the diffraction light guide plate according to the one aspect. Specifically, the optical layer 300 has a diffraction grating pattern 200 formed on one surface thereof, and the diffraction grating pattern may include one or more pattern units 400.

Specifically, the diffraction grating pattern 200 may include two or more pattern units 400 that are provided to be spaced apart from one side along the other side direction. The pattern unit is not particularly limited as long as it is a pattern capable of diffracting the guided light, but it may be a grid pattern having a shape such as a square column, a hexagonal column, a triangular pyramid, a cone, an elliptical cone, or a hemisphere, or a bar or stripe pattern. On the other hand, the shape of the cross section of the pattern unit is not particularly limited, but for example, it may have a square shape, a triangle shape, a rhombus shape, a trapezoid shape, and a parabolic shape. The direction of the cross section of the pattern unit may be a direction perpendicular to the diffraction light guide plate.

Further, the pitch between the pattern units 400 included in the diffraction grating pattern 200 may be 0.1 to 1 $\mu$m, 0.2 to 0.9 $\mu$m, 0.3 to 0.8 $\mu$m, or 0.4 to 0.7 $\mu$m, and the height may be 0.1 to 1 $\mu$m, 0.2 to 0.9 $\mu$m, 0.3 to 0.8 $\mu$m, or 0.4 to 0.7 $\mu$m.

The pitch refers to the interval at which the pattern unit 400 is repeated, and specifically, it may mean a length between one point of one pattern unit and one point of another adjacent pattern unit. Further, one point of one pattern unit and one point of another pattern unit may mean positions corresponding to each other between the pattern units, and the direction of the length is a direction parallel to the optical layer 300. Further, the direction of the height is a direction perpendicular to the optical layer.

When two or more pattern units 400 included in the diffraction grating pattern 200 are included, the shape of two or more pattern units may be identical, and specifically, the shape, pitch, height, etc. of the cross section may be identical. Consequently, the amount of light diffracted in the entire area of the diffraction light guide plate may be identical to each other. Further, the shape of two or more pattern units 400 included in the diffraction grating pattern 200 may be different, and specifically, the shape of the cross section may be identical, but the pitch and height may be different, and alternatively, the pitch may be identical, but the shape and height of the cross section may be different.

The thickness of the optical layer 300 may be 0.1 to 10 mm, 0.2 to 9 mm, 0.3 to 8 mm, 0.4 to 7 mm, or 0.5 to 5 mm. When the thickness of the optical layer is too thin, the number of times that the light incident on the diffraction light guide plate including the optical layer is unnecessarily totally reflected inside the diffractive light guide plate is increased, so that the luminance of the emitted light emitted from the diffractive light guide plate is decreased. Therefore, when such a diffraction light guide plate is used in a virtual reality device or the like, the resolution may be reduced. On the other hand, if the thickness of the optical layer is too thick, the transmittance of the external light to the diffraction light guide plate including the optical layer is reduced, so that the luminance of the external image is lowered, and thus visibility may be lowered.

The optical layer 300 on which the diffraction grating pattern 200 is formed on one surface may be a continuous phase of a polymer containing an episulfide compound and a thiol compound.

In the diffraction light guide plate, an optical layer in which the diffraction grating pattern is formed on one surface thereof is formed in a one-step process by a method for manufacturing a diffraction light guide plate which will be described later, and the diffraction grating pattern is formed in an integrated structure without an interface on one surface of the optical layer. The optical layer and the diffraction grating pattern formed on one surface of the optical layer may include a cured product of the same curable composition. That is, the optical layer on which the diffraction grating pattern is formed on one surface may be a continuous phase of a polymer containing an episulfide compound and a thiol compound. Further, the continuous phase of the polymer can implement a high refractive index even without including inorganic particles, and thus, it is possible to prevent problems related to the induction of haze occurring when using a large amount of inorganic particles.

The episulfide compound is not particularly limited as long as it is a compound having one or more episulfide groups in one molecule, and for example, it may be one or more selected from the group consisting of bis(2,3-epithiopropyl) sulfide, bis(2,3-epithiopropyl)disulfide, bis(2,3-epithiopropyl)trisulfide, bis(2,3-epithiopropylthio)methane, 1,2-bis(2,3-epithiopropylthio)ethane, 1,3-bis(2,3-epithiopropylthio)propane, 1,2-bis(2,3-epithiopropylthio)propane, 1,4-bis(2,3-epithiopropylthio)butane, and bis(2,3-epithiopropylthioethyl)sulfide.

The content of the episulfide compound may be 50 to 98 parts by mass, 60 to 95 parts by mass, or 70 to 90 parts by mass, based on 100 parts by weight of the episulfide compound and the thiol compound.

The thiol compound is not particularly limited as long as it is a compound having one or more mercapto groups in one molecule, and for example, it may be one or more selected from the group consisting of m-xylylenedithiol, p-xylylenedithiol, o-xylylenedithiol, 2,2'-thiodiethanethiol, pentaerythritol tetrakis(2-mercaptoacetate), pentaerythritol tetrakis(3-mercaptopropionate), and 1,2-bis(2-mercaptoethylthio)-3-mercaptopropane.

The content of the thiol compound may be 2 to 50 parts by weight, 5 to 40 parts by weight, or 10 to 30 parts by weight, based on 100 parts by weight of the episulfide compound and the thiol compound.

The continuous phase of the polymer may further include an isocyanate compound. The isocyanate compound is not particularly limited as long as it is a compound having one or more isocyanate groups per molecule, and for example, it may be one or more selected from the group consisting of xylylene diisocyanate compound, 1,3-bis(isocyanatomethyl) cyclohexane, isophorone diisocyanate, and hexamethylene diisocyanate,

The content of the isocyanate compound in the continuous phase of the polymer may be 1 to 20 parts by weight, 2 to 10 parts by weight, or 3 to 9 parts by weight, based on 100 parts by weight of the continuous phase of the polymer.

The continuous phase of the polymer may further include a polymerization catalyst. The kind of the polymerization catalyst is not particularly limited as long as it exhibits polymerization curing, and for example it may include amines, phosphines, quaternary ammonium salts, quaternary phosphonium salts, condensation products of aldehydes and amine compounds, carboxylic acid and ammonium salts, urethanes, thiourethanes, guanidines, thioureas, thiazoles, sulfenamides, thirams, dithiocarbamates, xanthogenates, tertiary sulfonium salts, secondary iodonium salts, mineral acids, Lewis acids, organic acids, silicic acids, tetrafluoroborates, peroxides, azo compounds, acidic phosphate esters.

More specifically, the polymerization catalyst may include quaternary ammonium salts, such as tetra-n-butylammonium bromide, triethylbenzyl ammonium chloride, cetyldimethylbenzyl ammonium chloride, or 1-n-dodecylpyridinium chloride, quaternary phosphonium salts, such as tetra-n-butylphosphonium bromide and tetraphenylphosphonium bromide.

The content of the polymerization catalyst in the continuous phase of the polymer may be 0.001 to 10 parts by weight, 0.005 to 5 parts by weight, or 0.01 to 3 parts by weight, based on 100 parts by weight of the continuous phase of the polymer.

The diffraction grating pattern 200 and one surface of the optical layer 300 may have a refractive index of 1.65 or more at a wavelength of 532 nm, respectively. In the case of a general glass substrate, the photorefractive index is 1.65 or more at a wavelength of 532 nm. Therefore, although the diffraction light guide plate including the optical layer on which the diffraction grating pattern is formed on one surface thereof is made of plastic, it can implement the same level of optical refractive index as the glass substrate, and thus, can replace the glass material. Also, when used as a lens for a wearable device due to its high light refractive index, optical loss is minimized and movement of optical information can be realized.

Further, the glass transition temperature of the diffraction light guide plate may be 40°C or more, 40°C to 150°C, 50°C to 130°C, or 80 to 100°C. In the case of a wearable device, continuous video transmission and output can be performed, and thereby, the temperature of the lens may be increased. On the other hand, the diffraction light guide plate may be implemented at a glass transition temperature of 40° C or more, and thus, even when used as a lens for a wearable device, changes in physical properties due to temperature can be minimized, thus achieving high durability.

The haze of the diffraction light guide plate may be 4.0% or less, 2% or less, 1% or less, or 0.1 to 1%. Since the diffraction light guide plate has a refractive index of 1.65 or more even without including inorganic particles, it does not induce haze and thus has high visibility.

The pencil hardness of the diffraction light guide plate obtained by the method of the claimed invention is HB or more, H or more, or 2H or more. Since the diffraction grating pattern 200 is formed in an integrated structure without an interface on one surface of the optical layer 300, mechanical properties such as pencil hardness and strength are excellent.

Further, even though the diffraction light guide plate includes one or more pattern units 400, a thickness deviation may be 3.0% or less, 2.5% or less, 1% or less, or 0.1 to 1%. As the value of the thickness deviation is lower, the thickness uniformity of the diffractive light guide plate is higher. Therefore, the diffraction light guide plate according to the one aspect may have excellent thickness uniformity. The thickness of the diffraction light guide plate may be 0.1 to 10 mm.

Further, the thickness deviation of the diffraction light guide plate can be derived as shown in the following general formula 1.

[General Formula 1]

Thickness deviation (%) = (Maximum deviation/Average thickness) X 100

The maximum thickness or minimum thickness can be measured by a contact measuring method using Mitsutoyo Digimatic Thickness Gauge 547-401 under an atmosphere of 25°C and 50 RH%. Alternatively, the maximum thickness or minimum thickness can be measured by a non-contact measuring method using Micro-Epsilon IFS-2405-1 or IFC-2451-MP apparatus under an atmosphere of 25°C and 50 RH%.

Meanwhile, the average thickness may be an average value of the thickness measured at an interval of 22.5 degrees with a radius of 10 mm, starting from any point on an arbitrarily placed test piece, by a contact measuring method using Mitsutoyo Digimatic Thickness Gauge 547-401 under an atmosphere of 25°C and 50 RH%. Alternatively, the average thickness may be an average value of the thickness measured at 1 mm intervals for each of the width and length, starting from any point on an arbitrarily placed test piece, by a non-contact measuring method using an OWTM (Optical Wafer Thickness Measurement system) (Fiberpro) under an atmosphere of 25°C and 50 RH%.

The warpage of the diffraction light guide plate may be 100 μm or less, 50 μm or less, 20 μm or less, 10 μm or less, or 0.1 to 10 μm. The diffraction light guide plate manufactured by the method of manufacturing the diffraction light guide plate according to the one aspect may satisfy the warpage range, and when the warpage of the diffraction light guide plate exceeds 100 μm, the reflection angle of the light incident on the diffraction light guide plate is not maintained, and thus, the resolution can be reduced when used for virtual reality devices.

Warpage is a numerical representation of the overall bending of the diffraction light guide plate, and can be derived as shown in the following general formula 2.

Warpage = Maximum deviation between center surface and reference surface - Minimum deviation between center surface and reference surface     [General Formula 2]

in the general formula 2, the center surface is a surface corresponding to the middle of the thickness of the diffraction light guide plate, and the reference surface is a surface calculated by the least squares fit with respect to the center surface within the measurement area. Accordingly, the warpage corresponds to a difference between the maximum and minimum deviations between the reference surface and the center surface.

Meanwhile, the center surface may be derived by a non-contact measuring method using an OWTM (Optical Wafer Thickness Measurement System) (Fiberpro) under an atmosphere of 25°C and 50 RH%.

The diffraction light guide plate may be for a diffraction light guide lens of a wearable device. Specifically, the wearable device is an augmented reality device or a virtual reality device, and the diffraction light guide plate may be included as a lens of the wearable device. Due to the diffraction grating pattern included in the diffraction light guide plate, it is possible to facilitate input, movement, and transmission of optical information.

According to the claimed invention, there is provided a method for manufacturing the above-mentioned diffraction light guide plate.

The present inventors have found that when the curable composition is injected into a normal mold apparatus and then cured to produce only a plastic substrate, due to the curing shrinkage of the curable composition, the cured product is peeled off from the mold substrate during curing, peeling marks remain on the surface of the manufactured plastic substrate and the thickness uniformity is greatly impaired. Also, they have found that when the resin composition for imprinting is applied onto the plastic substrate produced by the molding step and dried to form a resin layer and then the diffraction light guide plate is manufactured on the resin layer through the imprinting process, the interfacial adhesion between the plastic substrate and the imprinted resin layer is poor and thus, it is difficult to secure high pencil hardness. Thereby, the present disclosure has been developed.

The method for manufacturing the diffraction light guide plate according to another embodiment comprises:

a step of preparing a mold apparatus including a flat-plate lower substrate, a flat-plate upper substrate, a buffer spacer positioned between the flat-plate lower substrate and the flat-plate upper substrate and a template in which a diffraction grating pattern is engraved and included in the flat-plate lower substrate or the flat-plate upper substrate, and in which a molding space is partitioned by the buffer spacer;
a step of buffering a curable composition in the molding space; and
a step of compressing the curable composition under a load of the flat-plate upper substrate and curing the curable composition;
wherein the step of compressing the curable composition under a load of the flat-plate upper substrate and curing the curable composition is carried out so as to satisfy the following Equation 1.

$$\{(\text{Load of flat-plate upper substrate} + \text{Curing shrinkage force of curable composition}) \times 0.95\} \leq \text{Compressive stress of buffer spacer} \leq \{(\text{Load of flat-plate upper substrate} + \text{Curing shrinkage force of curable composition}) \times 1.05\}. \quad \text{[Equation 1]}$$

The method for manufacturing the diffraction light guide plate according to the claimed invention uses a buffer spacer, the phenomenon where the cured product is peeled off from the flat-plate lower substrate and the flat-plate upper substrate of the molding device according to the curing shrinkage of the curable composition during curing of the curable composition is minimized, and thereby, a diffraction light guide plate having excellent surface flatness and thickness uniformity can be manufactured.

Further, due to the use of a template in which the diffraction grating pattern is engraved, at the same time the curable composition is cured, the diffraction grating pattern engraved on the template is pressed onto or under the cured product, thereby forming a diffraction grating pattern on one surface of the finally manufactured diffraction light guide plate. Consequently, a diffraction light guide plate containing an optical layer in which a diffraction grating pattern is formed on one surface can be manufactured by a simple one-step process, without necessity to perform an additional resin layer formation process and imprinting process. Since the diffraction grating pattern is formed in an integrated structure without an interface on one surface of the optical layer, mechanical properties such as pencil hardness and strength are excellent.

Meanwhile, the compressive stress of the buffer spacer satisfies Equation 1 above. Since the compressive stress of the buffer spacer has a difference within 5% of the sum of the load of the flat-plate upper substrate and the curing shrinkage force of the curable composition, in the step of curing the curable composition, the flat-plate upper substrate comes into close contact with the curable composition due to the shrinkage during curing of the curable composition. Consequently, the manufactured diffraction light guide plate exhibits excellent surface flatness, and thus the thickness uniformity can be excellently realized.

Further, since the compressive stress of the buffer spacer satisfies Equation 1, the template included in the flat-plate lower substrate or the flat-plate upper substrate may also be in close contact with the curable composition. Consequently, the diffraction grating pattern engraved on the template may clearly appear as a diffraction grating pattern on one surface of the cured product.

On the other hand, when the compressive stress of the buffer spacer is less than {(load of flat-plate upper substrate + curing shrinkage force of curable composition) X 0.95}, curing is completed before reaching equilibrium, which causes non-uniformity in thickness of the diffractive light guide plate, and the diffraction grating pattern may not appear clearly. And, when the compressive stress of the buffer spacer is greater than {(load of flat-plate upper substrate + curing shrinkage force of curable composition) X 1.05}, non-uniformity in shrinkage may occur during curing, resulting in poor appearance characteristics of the diffraction light guide plate.

Specifically, according to an embodiment of the present disclosure, the Equation 1 may satisfy the following Equation 1-1, Equation 1-2, or Equation 1-3.

$$\{(\text{Load of flat-plate upper substrate} + \text{Curing shrinkage force of curable composition}) \times 0.97\} \leq \text{Compressive stress of buffer spacer} \leq \{(\text{Load of flat-plate upper substrate} + \text{Curing shrinkage force of curable composition}) \times 1.03\} \quad \text{[Equation 1-1]}$$

$$\{(\text{Load of flat-plate upper substrate} + \text{Curing shrinkage force of curable composition}) \times 0.98\} \leq \text{Compressive stress of buffer spacer} \leq \{(\text{Load of flat-plate upper substrate} + \text{Curing shrinkage force of curable composition}) \times 1.02\} \quad \text{[Equation 1-2]}$$

{(Load of flat-plate upper substrate + Curing shrinkage force of curable composition) X 0.99} ≤ Compressive stress of buffer spacer ≤ {(Load of flat upper substrate + Curing shrinkage force of curable composition) X 1.01}     [Equation 1-3]

Specifically, the compressive stress of the buffer spacer may have a difference within 3%, within 2%, or within 1% of the sum of the load of the flat-plate upper substrate and the curing shrinkage force of the curable composition. Consequently, the manufactured diffraction light guide plate exhibits a more excellent surface flatness, and can be realized more excellently in thickness uniformity.

Units of the load of the flat-plate upper substrate, the curing shrinkage force of the curable composition, and the compressive stress of the buffer spacer may be kgf or N.

The buffer spacer may serve to prevent the cured product of the curable composition from being peeled off from the flat-plate upper substrate due to the curing shrinkage of the curable composition. Specifically, the buffer spacer has a compressive stress in consideration of the degree of curing shrinkage and the load of the flat-plate upper substrate as the curable composition is cured, it is compressed by the load of the flat-plate upper substrate according to the curing shrinkage of the curable composition, and it may serve to maintain a state in which the curable composition and the flat-plate upper substrate are in close contact with each other in the step of curing the curable composition. Further, when the template in which the diffraction grating pattern is engraved is included in the flat upper substrate and is located on the flat-plate upper substrate, the buffer spacer may serve to maintain a state in which the template and the curable composition are in close contact with each other in the step of curing the curable composition.

The load of the flat-plate upper substrate may be 3.4 N to 34 N, 5.9 N to 27 N, or 7 N to 25 N. When the load of the flat-plate upper substrate is within the above range, deformation due to curing shrinkage at the time of curing the curable composition can be minimized. Further, it is possible to minimize the decrease in transmittance during photocuring of the curable composition, and induce uniform curing of the curable composition. On the other hand, when the template in which the diffraction grating pattern is engraved is included in the flat-plate upper substrate and is located on the flat-plate upper substrate, the load of the flat-plate upper substrate corresponds to a load including a load due to a template in which the diffraction grating pattern is engraved.

In Equation 1, the curing shrinkage force of the curable composition may be measured by the following method. Specifically, a certain amount of the curable composition is applied onto the lower jig using Texure Analyzer (TA) under an atmosphere of 25°C and 50 RH%, and then the upper jig is lowered and brought into contact with the curable composition to record the initial value of force. And, after raising the temperature to 90°C and maintaining it for 5 hours, the final value of the force can be recorded and measured by a value obtained from the difference between the final value and the initial value of the force.

In Equation 1, the compressive stress of the buffer spacer can be measured by the following method. Specifically, when compressed with a test piece area of 5 X 5 mm$^2$ at a compression speed of 1 mm/min using Texure Analyzer (TA) under an atmosphere of 25°C and 50 RH%, it may be a measured value of the force at the moment of reaching the deformation of the test piece ((initial thickness - thickness after deformation) / initial thickness).

The molding space may be partitioned by the buffer spacer. Specifically, when a template in which a diffraction grating pattern is engraved on the flat-plate lower substrate is provided, the molding space is partitioned by the buffer spacer, and may mean an empty space provided between the template and the flat-plate upper substrate. Alternatively, when a template in which a diffraction grating pattern is engraved on the flat-plate upper substrate is provided, the molding space is partitioned by the buffer spacer, and may mean an empty space provided between the template and the flat-plate lower substrate.

The method for manufacturing a light guide plate according to the other embodiment may include a step of buffering the curable composition in the molding space.

Specifically, the step of buffering the curable composition means that the curable composition is injected into the molding space and sufficiently filled so that the curable composition is in close contact with the flat-plate lower substrate (or the flat-plate upper substrate) and the template in which the diffraction grating pattern is engraved. In particular, the curable composition may be tightly adhered to the entire surface of the engraved pattern of the template. Specifically, the step of buffering the curable composition may mean injecting the curable composition in an amount of 95 vol% or more, 97 vol% or more, 99 vol% or more, or 100 vol% into the molding space.

Further, the step of buffering the curable composition may use various methods, such as a method of injecting the curable composition into a molding space partitioned between the buffer spacer and the flat-plate lower substrate, and laminating the flat-plate upper substrate containing the template; a method of injecting the curable composition into a molding space partitioned by a flat-plate lower substrate containing the buffer type spacer and the template, and laminating the flat-plate upper substrate; a method of injecting the curable composition through an injection port in the molding device, and the like.

Meanwhile, the curable composition may be a photocurable composition or a heat-curing composition, and can

**EP 3 940 291 B1**

be applied without limitation if it is for manufacturing a diffraction light guide plate. Specifically, the curable composition may be applied without limitation as long as it is capable of manufacturing a diffraction light guide plate using mold casting. For example, the curable composition may include an episulfide compound and a thiol compound.

The episulfide compound is not particularly limited as long as it is a compound having one or more episulfide groups in one molecule, and for example, it may be one or more selected from the group consisting of bis(2,3-epithiopropyl) sulfide, bis(2,3-epithiopropyl)disulfide, bis(2,3-epithiopropyl)trisulfide, bis(2,3-epithiopropylthio)methane, 1,2-bis(2,3-epithiopropylthio)ethane, 1,3-bis(2,3-epithiopropylthio)propane, 1,2-bis(2,3-epithiopropylthio)propane, 1,4-bis(2,3-epithiopropylthio)butane, and bis(2,3-epithiopropylthioethyl)sulfide.

The content of the episulfide compound in the curable composition may be 50 to 98 parts by mass, 60 to 95 parts by mass, or 70 to 90 parts by mass, based on 100 parts by weight of the episulfide compound and the thiol compound.

The thiol compound is not particularly limited as long as it is a compound having one or more mercapto groups in one molecule, and for example, it may be one or more selected from the group consisting of m-xylylenedithiol, p-xylylenedithiol, o-xylylenedithiol, 2,2'-thiodiethanethiol, pentaerythritol tetrakis(2-mercaptoacetate), pentaerythritol tetrakis(3-mercaptopropionate), and 1,2-bis(2-mercaptoethylthio)-3-mercaptopropane.

The content of the thiol compound in the curable composition may be 2 to 50 parts by weight, 5 to 40 parts by weight, or 10 to 30 parts by weight, based on 100 parts by weight of the episulfide compound and the thiol compound.

The curable composition may further include an isocyanate compound. The isocyanate compound is not particularly limited as long as it is a compound having one or more isocyanate groups per molecule, and for example, it may be one or more selected from the group consisting of xylylene diisocyanate compound, 1,3-bis(isocyanatomethyl) cyclohexane, isophorone diisocyanate, and hexamethylene diisocyanate,

The content of the isocyanate compound in the curable composition may be 1 to 20 parts by weight, 2 to 10 parts by weight, or 3 to 9 parts by weight, based on 100 parts by weight of the curable composition.

The curable composition may further include a polymerization catalyst. The kind of the polymerization catalyst is not particularly limited as long as it exhibits polymerization curing, and for example, it may include amines, phosphines, quaternary ammonium salts, quaternary phosphonium salts, condensation products of aldehydes and amine compounds, carboxylic acid and ammonium salts, urethanes, thiourethanes, guanidines, thioureas, thiazoles, sulfenamides, thirams, dithiocarbamates, xanthogenates, tertiary sulfonium salts, secondary iodonium salts, mineral acids, Lewis acids, organic acids, silicic acids, tetrafluoroborates, peroxides, azo compounds, acidic phosphate esters.

More specifically, the polymerization catalyst may include quaternary ammonium salts, such as tetra-n-butylammonium bromide, triethylbenzyl ammonium chloride, cetyldimethylbenzyl ammonium chloride, or 1-n-dodecylpyridinium chloride, quaternary phosphonium salts, such as tetra-n-butylphosphonium bromide and tetraphenylphosphonium bromide.

The content of the polymerization catalyst in the curable compositon may be 0.001 to 10 parts by weight, 0.005 to 5 parts by weight, or 0.01 to 3 parts by weight, based on 100 parts by weight of the curable compositon.

Meanwhile, the curable composition may have a curing shrinkage of 15% or less, 1% to 15% or less, 1% or more and 12% or less, or 1% or more and 10% or less, but is not limited thereto.

The method for manufacturing a light guide plate according to the other embodiment may include a step of compressing the curable composition under a load of the flat-plate upper substrate, and curing the curable composition.

FIG. 2 is a diagram schematically showing a cross section of a mold apparatus in a step of curing the curable composition. Specifically, FIG. 2 shows that the curable composition 600 was injected and buffered into a molding space of the molding apparatus including a buffer spacer 503 provided between a flat-plate lower substrate 501 and a flat-plate upper substrate 502 including a template 504 in which a diffraction grating pattern is engraved. In this way, after the curable composition is buffered, photocuring and/or heat-curing may be performed to prepare a diffraction light guide plate.

For the heat-curing, the heating rate of the curable composition during heat treatment may be 2°C/min or less, 1°C/min or less, or 0.1 to 0.5°C/min. When the heating rate is within the above range, it is possible to minimize a devatioin between positions of heat transferred to the curable composition and minimizing the nonuniform discharge of reaction heat, thereby inducing uniform curing of the curable composition.

The final temperature during the heat curing may be 50 to 100°C, or 60 to 80°C. By providing the isothermal maintenance sections three or more times at a temperature lower than the final temperature before reaching the final temperature, it is possible to minimize the deviation between positions of heat transferred to the curable composition. The temperature difference between the isothermal maintenance sections may be 10°C to 20°C, and the holding time of the isothermal maintenance section may be 1 hour to 5 hours, respectively. For example, the curable composition is allowed to stand at room temperature (25°C) for 2 hours, and then heat-cured at 45°C for 2 hours, at 60°C for 2 hours, at 75°C for 2 hours, and at 90°C for 4 hours. Thereby, a diffraction light guide plate can be manufactured.

In the step of curing the curable composition, a diffraction grating pattern may be formed on one surface of the optical layer by a template in which the diffraction grating pattern is engraved. The diffraction grating pattern is the same as the description of the diffraction grating pattern formed on one surface of the optical layer included in the above-mentioned diffraction light guide plate.

The flexural elastic modulus of the flat-plate lower substrate and the flat-plate upper substrate may be 3 GPa or more, 10 GPa or more, 20 GPa or more, or 40 GPa to 300 GPa, respectively. When the flexural elastic modulus of the flat-plate lower substrate and the flat-plate upper substrate is within the above range, the bowing of the flat-plate upper substrate can be minimized, and thus, the thickness uniformity of the manufactured diffraction light guide plate can be greatly increased.

The flexural elastic modulus of the template in which the diffraction grating pattern is engraved may be 1 to 20 GPa, 1.5 to 15 GPa, or 2 to 10 GPa. When the flexural elastic modulus of the template in which the diffraction grating pattern is engraved is less than 1 GPa, with the curing shrinkage of the curable composition, the uniformity of the diffraction grating pattern may be impaired, and when the flexural elastic modulus exceeds 20 GPa, the diffraction grating pattern engraved on the template may be impaired due to excessive rigidity.

The surface flatness of the flat-plate lower substrate and the flat-plate upper substrate may be 5 $\mu$m or less, 2 $\mu$m or less, or 0.01 to 1 $\mu$m, respectively. When the flatness of the surface of the flat-plate lower substrate and the flat-plate upper substrate is within the above range, the surface flatness of the manufactured diffraction light guide plate can also be greatly improved than that of a general diffraction light guide plate.

The method of measuring the surface flatness is as follows. Specifically, it can be measured by the value obtained by the difference between the highest height value and the lowest height value which is measured from one point per 0.16 X 0.16 mm$^2$ in a 200 mm diameter area with an ASI (aspheric stitching interferometry) apparatus (QED Technologies) under an atmosphere of 25°C and 50 RH%, or measured at intervals of 11.25 degrees with radius 5 mm based on an arbitrary origin in a 200 mm diameter area using a three-dimensional shape measuring apparatus (Dukin Co., Ltd. ).

The flat-plate lower substrate and the flat-plate upper substrate may be transparent substrates, respectively. Specifically, the flat-plate lower substrate and the flat-plate upper substrate may be organic substrates, respectively. This can effectively perform photocuring of the curable composition due to excellent light transmission.

The compressive elastic modulus of the buffer spacer may be 0.1 MPa to 10 MPa, 0.1 MPa to 5 MPa, 0.1 MPa to 3 MPa, or 0.1 MPa to 2 MPa. When the compressive elastic modulus of the buffer spacer is within the above range, a load is uniformly transferred to the curable composition when the flat-plate upper substrate is in contact, so that the thickness uniformity of the diffraction light guide plate can be increased, and the diffraction grating pattern engraved on the template can be clearly appeared as a diffraction grating pattern on one surface of the cured product.

The method for measuring the compressive elastic modulus of the buffer spacer is as follows. It may mean the slope of the test piece deformation ((initial thickness - thickness after deformation) / initial thickness) with the force measured when compressed using Texture Analyzer (TA) with a test piece area of 5X5mm$^2$ and a compressibility of 1 mm/min under an atmosphere of 25°C and 50 RH%. Further, when the buffer spacer is composed of two or more different layers, the compressive modulus of the buffer spacer may be the measured value for the test piece deformation ((initial thickness - thickness after deformation) / initial thickness) with the force measured after the laminated specimen is prepared with an area of 5 X 5 mm$^2$ and compressed at a compression speed of 1 mm/min.

The buffer spacer may have a structure in which an inelastic layer and an elastic layer are laminated, a structure in which an elastic layer is provided between the inelastic layers, or a structure in which an inelastic layer is provided between the elastic layers. On the other hand, when the buffer spacer has a structure in which an inelastic layer and an elastic layer are laminated, a structure in which an elastic layer is provided between the inelastic layers, or a structure in which an inelastic layer is provided between the elastic layers, the compressive elastic modulus of the buffer spacer may mean a compressive elastic modulus of elasticity of the elastic layer.

Since the buffer spacer may be designed in consideration of the degree of shrinkage of the curable composition, it is possible to perform the role of supporting with the inelastic layer, and to perform the role of adjusting the change in height according to the shrinkage of the curable composition with the elastic layer.

The curing shrinkage rate of the curable composition may be 15% or less, 1% to 15% or less, 1% or more and 12% or less, or 1% or more and 10% or less.

The curing shrinkage rate of the curable composition may be derived as shown in the following general formula 3.

Curing shrinkage (%) = {(Volume before curing - Volume after complete curing) / Volume before curing} X 100.    [General Formula 3]

The method of manufacturing the diffraction light guide plate according to the another embodiment may further include a step of obtaining a diffraction light guide plate from the mold apparatus. Specifically, in the step of obtaining the diffraction light guide plate, the diffraction light guide plate may be obtained by removing the flat-plate upper substrate, the flat-plate lower substrate, and the template in which the diffraction grating pattern is engraved. Removing the flat-plate upper substrate, the flat-plate lower substrate, and the template may include, after completion of the curing of the curable composition, separating the flat-plate upper substrate, the flat-plate lower substrate, and the template from a diffraction light guide plate which is a cured product of the curable composition.

The description concerning the physical properties such as thickness and thickness deviation, refractive index, glass transition temperature, haze, and the like of the diffraction light guide plate manufactured by the method of manufacturing the diffraction light guide plate according to the other embodiment are the same as mentioned in the above-mentioned diffraction light guide plate. Further, the diffraction light guide plate may be for a diffraction light guide lens of a wearable device as mentioned above.

On the other hand, the thickness of the diffraction light guide plate may be adjusted according to the separation distance between the flat-plate lower substrate and the flat-plate upper substrate and the curing shrinkage rate of the curable composition, and the thickness of the diffraction light guide plate may be adjusted within the above range depending on the application of the diffraction light guide plate.

The surfaces of the flat-plate lower substrate, the flat-plate upper substrate, and the template in which the diffraction grating pattern is engraved may be surfacetreated with a mold releasing agent, respectively. The mold release agent can be applied without limitation as long as it is generally used in the art. As an example, the surface treatment with the mold release agent may be surface-coated with a fluorinebased silane coupling agent. When the surface is coated using the mold release agent, in the step of obtaining the diffraction light guide plate, damage to the surface of the diffraction light guide plate is minimized, and the flat-plate lower substrate, the flat-plate upper substrate, and the template may be removed.

## ADVANTAGEOUS EFFECTS

According to the claimed invention, it is possible to provide a method for manufacturing by a simple one-step process a diffraction light guide plate that has excellent thickness uniformity and flatness, and at the same time, has low haze, and excellent mechanical properties such as pencil hardness and strength.

## BRIEF DESCRIPTION OF THE DRAWINGS

FIG. 1 is a diagram schematically showing a cross section of an optical layer included in a diffraction light guide plate according to an aspect of the present disclosure.

FIG. 2 is a diagram schematically showing a cross section of a mold apparatus in a step of curing a curable composition of the method of manufacturing a diffractive light guide plate according to another embodiment of the present disclosure.

## DETAILED DESCRIPTION

Hereinafter, the present disclosure will be described in more detail by way of the following examples. However, these examples are provided for illustrative purposes only and are not intended to limit the scope of the present disclosure.

**Preparation Example: Preparation of curable composition**

A curable composition containing 88.5 parts by weight pf bis(2,3-epithiopropyl)disulfide, 6.5 parts by weight of 2,2'-thiodiethanethiol, 5.0 parts by weight of isophorone diisocyanate and 0.07 parts by weight of tetrabutylphosphonium bromide was prepared.

The curing shrinkage force of the prepared curable composition was $2.00 \times 10^{-4}$ $N/mm^3$ as a result of measuring by the above-mentioned method of measuring the curing shrinkage force.

**Example 1**

As a lower substrate, a glass substrate having a flexural elastic modulus of 70 GPa, a surface flatness of 0.5 $\mu$m, a thickness of 30 mm, and a diameter of 200 mm was prepared, and a template (flexural elastic modulus: 3GPa) in which a diffraction grating pattern was engraved was attached to the lower substrate. At this time, it was attached so that the circular center of the lower substrate and the circular center of the template are in contact, and the template was polyethylene terephthalate (PET) having a diameter of 150 mm and a thickness of 200 $\mu$m, and the engraved diffraction grating pattern had a pitch of 405 nm and a depth of 500 nm.

Thereafter, a buffer spacer made of silicon having a compressive elastic modulus of 1.0 MPa, a height of 1,007 $\mu$m, and a cross-sectional area of 10 X 10 $mm^2$ was provided at 120° intervals to contact the circumference of the lower substrate, thus forming a molding space, and then the curable composition prepared according to the Preparation Example was buffered in the molding space using a glass substrate having a flexural elastic modulus of 70 GPa, a load of 8.2 N, a diameter of 200 mm, and a surface flatness of 0.5 μm as an upper substrate.

Further, the curable composition was placed in a convection oven (Jeio Tech), allowed to stand at room temperature for 2 hours, and then the temperature rising rate was set to 1°C/min, and then heat-cured for 2 hours at 45°C, for 2 hours at 60°C, for 2 hours at 75°C, and at 90°C for 4 hours to prepare a diffraction light guide plate having a thickness of 0.8 mm.

**Example 2**

The diffraction light guide plate was manufactured in the same manner as in Example 1, except that the template in which the diffraction grating pattern was engraved was attached to the upper substrate rather than the lower substrate.

**Example 3**

The diffraction light guide plate was manufactured in the same manner as in Example 1, except that the height of the spacer is 427 μm and the template in which the diffraction grating pattern was engraved was attached to the upper substrate rather than the lower substrate.

**Comparative Example 1**

A glass substrate having a flexural elastic modulus of 70 GPa, a surface flatness of 0.5 μm, a thickness of 30 mm, and a diameter of 200 mm was used as the lower substrate, and a buffer spacer made of silicon having a compressive elastic modulus of 1.0 MPa, a height of 805 μm, and a cross-sectional area of 10 X 10 mm$^2$ was provided at 120° intervals so as to be contact with the circumference of the lower substrate, thus forming a molding space. Then, the curable composition prepared according to the Preparation Example was injected into the molding space, and then the curable composition using a glass substrate having a flexural elastic modulus of 70 GPa, a load of 8.2 N, a diameter of 200 mm, and a surface flatness of 0.5 μm was used as an upper substrate, so that the curable composition was buffered in the molding space.

Further, the curable composition was placed in a convection oven (Jeio Tech), allowed to stand at room temperature for 2 hours, and then the temperature rising rate was set to 1°C/min, and then heat-cured at 45°C for 2 hours, at 60°C for 2 hours, at 75°C for 2 hours, and at 90°C for 4 hours to prepare a plastic substrate.

The imprint resin composition (refractive index 1.70) containing 8.3 parts by weight of zirconia particles having a particle diameter of 20 nm, 8.3 parts by weight of dipentaerythritol hexaacrylate (DPHA), 83 parts by weight of butyl carbitol acetate and 0.4 parts by weight of ethyl (2,4,6-trimethylbinzoyl)phenylphosphinate was coated onto the plastic substrate and dried to form an imprint resin layer having a thickness of 1 μm. Then, a template (diameter 150 mm, thickness 200 μm, polyethylene terephthalate) in which a diffraction grating pattern having a pitch of 405 nm and a depth of 1 μm was engraved was pressed on the imprint resin layer applied at a temperature of 40°C and a pressure of 20 bar to form a diffraction grating, which was then cured by irradiating with UV (360nm light source) of 1000mJ/cm2 to prepare a diffraction light guide plate having a thickness of 0.8 mm, and cut into a rectangular shape of 6 x 5 cm.

**Evaluation**

**1. Measurement of thickness deviation**

The thickness deviation of the diffraction light guide plates of Examples and Comparative Examples was calculated using the following General Formula 1, and the results are shown in Table 1 below.

[General Formula 1]

Thickness deviation (%) = (Maximum deviation / Average thickness) X 100

Specifically, the thickness of the diffraction light guide plate was measured as follows. The maximum thickness or the minimum thickness was measured by a contact measuring method using Mitsutoyo Digimatic Thickness Gauge 547-401 under an atmosphere of 25°C and 50 RH%. Also, the average value of the thickness measured at an interval of 22.5 degrees with a radius of 10 mm from an arbitrary point of the test piece as the origin was measured as the average thickness.

**2. Measurement of Warpage**

A test piece of a rectangular region of a major axis 600 mm and a minor axis 400 mm for the diffraction light guide plates of Examples and Comparative Examples was prepared, and warpage was calculated using the following general formula 2, and the results are shown in Table 1 below.

Warpage = Maximum deviation between center surface and reference surface - Minimum deviation between center surface and reference surface    [General Formula 2]

The center surface can be derived by using a non-contact measuring method using an OWTM (Optical Wafer Thickness Measurement System) (Fiberpro) under an atmosphere of 25°C and 50 RH%, and measuring the thickness of the diffraction light guide plate and the distance between the reference optical body installed under the diffraction light guide plate and the diffraction light guide plate. Meanwhile, the reference surface may be calculated using a least squares fit with respect to the center surface.

**3. Measurement of haze**

Haze of the diffraction light guide plates of Examples and Comparative Examples was measured according to ASTM D-1003, and the results are shown in Table 1 below.

**4. Measurement of pencil hardness**

A pencil was set on the surface of the diffractive light guide plates of Examples and Comparative Examples at an angle of 45° under a load of 0.5 kg, and the surface was scratched for each pencil hardness. Whether the test piece was scratched or not was determined with the naked eye, and the maximum pencil hardness that did not cause scratchs was measured and shown in Table 1 below.

[Table 1]

|  | Example 1 | Example 2 | Example 3 | Comparative Example 1 |
|---|---|---|---|---|
| Thickness deviation (%) | 2.1 | 2.2 | 2.2 | 2.1 |
| Warpage ($\mu$m) | 28 | 24 | 24 | 65 |
| Haze (%) | 1.4 | 1.55 | 1.58 | 4.2 |
| Pencil hardness | 2H | 2H | 2H | 6B |

According to Table 1 above, it was confirmed that the diffraction light guide plate of Examples including the optical layer in which the diffraction grating pattern was formed on one surface exhibited remarkably excellent pencil hardness as compared with Comparative Example where there was an interface between the plastic substrate and the diffraction grating pattern. In addition, it can be predicted that since the Examples did not contain inorganic particles, the haze was significantly lower and thus the visibility was high as compared with Comparative Example containing inorganic particles. Furthermore, it was confirmed that the warpage of the examples was significantly lower than that of Comparative Examples.

**EXPLANATION OF SIGN**

| 200: | diffraction grating pattern | 300: | optical layer |
|---|---|---|---|
| 400: | pattern unit | 501: | flat-plate lower substrate |
| 502: | flat-plate upper substrate | 503: | buffer spacer |
| 504: | template in which the diffraction grating pattern is engraved | | |
| 600: | curable composition | | |

[Table 1]

|  | Example 1 | Example 2 | Example 3 | Comparative Example 1 |
|---|---|---|---|---|
| Thickness deviation (%) | 2.1 | 2.2 | 2.2 | 2.1 |
| Warp ($\mu$m) | 28 | 24 | 24 | 65 |
| Haze (%) | 1.4 | 1.55 | 1.58 | 4.2 |
| Pencil hardness | 2H | 2H | 2H | 6B |

According to Table 1 above, it was confirmed that the diffraction light guide plate of Examples including the optical layer in which the diffraction grating pattern was formed on one surface exhibited remarkably excellent pencil hardness as compared with Comparative Example where there was an interface between the plastic substrate and the diffraction grating pattern. In addition, it can be predicted that since the Examples did not contain inorganic particles, the haze was significantly lower and thus the visibility was high as compared with Comparative Example containing inorganic particles. Furthermore, it was confirmed that the warp of the examples was significantly lower than that of Comparative Examples.

## EXPLANATION OF SIGN

| 200: | diffraction grating pattern | 300: | optical layer |
|---|---|---|---|
| 400: | pattern unit | 501: | flat-plate lower substrate |
| 502: | flat-plate upper substrate | 503: | buffer spacer |
| 504: | template in which the diffraction grating pattern is engraved | | |
| 600: | curable composition | | |

## Claims

1. A method for manufacturing a diffraction light guide plate, the method comprising:

a step of preparing a mold apparatus including a flat-plate lower substrate (501), a flat-plate upper substrate (502), a buffer spacer (503) positioned between the flat-plate lower substrate and the flat-plate upper substrate and a template (504) in which a diffraction grating pattern is engraved and included in the flat-plate lower substrate or the flat-plate upper substrate, and in which a molding space is partitioned by the buffer spacer;
a step of injecting a curable composition (600) in the molding space so that the curable composition is in close contact with the template and at least one of the flat-plate lower substrate and the flat-plate upper substrate; and
a step of compressing the curable composition under a load of the flat-plate upper substrate and curing the curable composition;
wherein the step of compressing the curable composition under a load of the flat-plate upper substrate and curing the curable composition is carried out so as to satisfy the following Equation 1, and
wherein a pencil hardness of the diffraction light guide plate is HB or more.

$\{$(Load of flat-plate upper substrate + Curing shrinkage force of curable composition) X 0.95$\} \leq$ Compressive stress of buffer spacer $\leq \{$(load of flat-plate upper substrate + curing shrinkage force of curable composition) X 1.05$\}$.　　　Equation 1

2. The method for manufacturing the diffraction light guide plate of claim 1, wherein a flexural elastic modulus of the flat-plate lower substrate and the flat-plate upper substrate is 3 GPa or more, respectively.

3. The method for manufacturing the diffraction light guide plate of claim 1, wherein the template on which the diffraction grating pattern is engraved has a flexural elastic modulus of 1 to 20 GPa.

4. The method for manufacturing the diffraction light guide plate of claim 1,
   wherein the flat-plate lower substrate and the flat-plate upper substrate has a surface flatness of 5 $\mu$m or less, respectively.

5. The method for manufacturing the diffraction light guide plate of claim 1,
   wherein the buffer spacer has a compressive elastic modulus of 0.1 to 10 MPa.

6. The method for manufacturing the diffraction light guide plate of claim 1,
   wherein the curable composition has a curing shrinkage rate of 15% or less.

7. The method for manufacturing the diffraction light guide plate of claim 1,
   wherein the curable composition contains an episulfide compound and a thiol compound.

8. The method for manufacturing the diffraction light guide plate of claim 7,
   wherein the curable composition further includes an isocyanate compound.

9. The method for manufacturing the diffraction light guide plate of claim 1,

   wherein a warpage of the diffraction light guide plate is 100 $\mu$m or less,
   a haze of the diffraction light guide plate is 4.0% or less, and
   a thickness deviation of the diffraction light guide plate is 3.0% or less.


**Patentansprüche**

1. Verfahren zur Herstellung einer Beugungslichtleiterplatte, wobei das Verfahren Folgendes umfasst:

   einen Schritt des Vorbereitens einer Formvorrichtung, die ein unteres flaches Substrat (501), ein oberes flaches Substrat (502), einen Pufferabstandhalter (503), der zwischen dem unteren flachen Substrat und dem oberen flachen Substrat positioniert ist, und eine Schablone (504) einschließt, in die ein Beugungsgittermuster eingraviert und in das untere flache Substrat oder das obere flache Substrat eingeschlossen ist, und in der ein Formraum durch den Pufferabstandhalter unterteilt ist;
   einen Schritt des Injizierens einer aushärtbaren Zusammensetzung (600) in den Formraum, so dass die aushärtbare Zusammensetzung in engem Kontakt mit der Schablone und dem unteren flachen Substrat und/oder dem oberen flachen Substrat steht; und
   einen Schritt des Komprimierens der aushärtbaren Zusammensetzung unter einer Last des oberen flachen Substrats und des Aushärtens der aushärtbaren Zusammensetzung;
   wobei der Schritt des Komprimierens der aushärtbaren Zusammensetzung unter einer Last des oberen flachen Substrats und des Aushärtens der aushärtbaren Zusammensetzung so durchgeführt wird, dass er die folgende Gleichung 1 erfüllt, und
   wobei eine Bleistifthärte der Beugungslichtleiterplatte HB oder mehr ist.

   {(Last des oberen flachen Substrats + Aushärtungsschrumpfkraft der aushärtbaren Zusammensetzung) X 0,95} ≤ Druckspannung des Pufferabstandshalters ≤ {(Last des oberen flachen Substrats + Aushärtungsschrumpfkraft der aushärtbaren Zusammensetzung) X 1,05}.          Gleichung 1


2. Verfahren zur Herstellung der Beugungslichtleiterplatte nach Anspruch 1,
   wobei ein Biegeelastizitätsmodul des unteren flachen Substrats und des oberen flachen Substrats jeweils 3 GPa oder mehr beträgt.

3. Verfahren zur Herstellung der Beugungslichtleiterplatte nach Anspruch 1,
   wobei die Schablone, auf der das Beugungsgittermuster eingraviert ist, einen Biegeelastizitätsmodul von 1 bis 20 GPa aufweist.

4. Verfahren zur Herstellung der Beugungslichtleiterplatte nach Anspruch 1, wobei das untere flache Substrat bzw. das obere flache Substrat eine Oberflächenebenheit von 5 $\mu$m oder weniger aufweist.

**5.** Verfahren zur Herstellung der Beugungslichtleiterplatte nach Anspruch 1,
wobei der Pufferabstandshalter ein Druckelastizitätsmodul von 0,1 bis 10 MPa aufweist.

**6.** Verfahren zur Herstellung der Beugungslichtleiterplatte nach Anspruch 1,
wobei die aushärtbare Zusammensetzung eine Aushärtungsschrumpfrate von 15 % oder weniger aufweist.

**7.** Verfahren zur Herstellung der Beugungslichtleiterplatte nach Anspruch 1,
wobei die aushärtbare Zusammensetzung eine Episulfidverbindung und eine Thiolverbindung enthält.

**8.** Verfahren zur Herstellung der Beugungslichtleiterplatte nach Anspruch 7,
wobei die aushärtbare Zusammensetzung ferner eine Isocyanatverbindung einschließt.

**9.** Verfahren zur Herstellung der Beugungslichtleiterplatte nach Anspruch 1,

wobei eine Verformung der Beugungslichtleiterplatte 100 $\mu$m oder weniger beträgt,
eine Trübung der Beugungslichtleiterplatte 4,0 % oder weniger beträgt, und
eine Dickenabweichung der Beugungslichtleiterplatte 3,0 % oder weniger beträgt.

**Revendications**

**1.** Procédé de fabrication d'une plaque de guidage de lumière de diffraction, le procédé comprenant :

une étape de préparation d'un appareil de moulage incluant un substrat inférieur à plaque plane (501), un substrat supérieur à plaque plane (502), une entretoise tampon (503) positionnée entre le substrat inférieur à plaque plane et le substrat supérieur à plaque plane et un gabarit (504) dans lequel un motif de réseau de diffraction est gravé et inclus dans le substrat inférieur à plaque plane ou le substrat supérieur à plaque plane, et dans lequel un espace de moulage est divisé par l'entretoise tampon ;
une étape d'injection d'une composition durcissable (600) dans l'espace de moulage de sorte que la composition durcissable soit en contact étroit avec le gabarit et au moins un substrat parmi le substrat inférieur à plaque plane et le substrat supérieur à plaque plane ;
une étape de compression de la composition durcissable sous une charge du substrat supérieur à plaque plane et de durcissement de la composition durcissable ;
dans lequel l'étape de compression de la composition durcissable sous une charge du substrat supérieur à plaque plane et de durcissement de la composition durcissable est effectuée de manière à satisfaire l'Équation 1 suivante, et
dans lequel une dureté au crayon de la plaque de guidage de lumière de diffraction est HB ou plus.

Équation 1 {(Charge du substrat supérieur à plaque plane + Force de rétrécissement lors du durcissement de la composition durcissable) X 0,95} $\leq$ Contrainte de compression de l'entretoise tampon $\leq$ {(charge du substrat supérieur à plaque plane + force de rétrécissement lors du durcissement de la composition durcissable) X 1,05}.   Equation 1

**2.** Procédé de fabrication de la plaque de guidage de lumière de diffraction selon la revendication 1,
dans lequel un module d'élasticité en flexion du substrat inférieur à plaque plane et du substrat supérieur à plaque plane est de 3 GPa ou plus, respectivement.

**3.** Procédé de fabrication de la plaque de guidage de lumière de diffraction selon la revendication 1,
dans lequel le gabarit sur lequel le motif de réseau de diffraction est gravé présente un module d'élasticité de 1 à 20 GPa.

**4.** Procédé de fabrication de la plaque de guidage de lumière de diffraction selon la revendication 1,
dans lequel le substrat inférieur à plaque plane et le substrat supérieur à plaque plane présentent une planéité de surface de 5 $\mu$m ou moins, respectivement.

**5.** Procédé de fabrication de la plaque de guidage de lumière de diffraction selon la revendication 1,

dans lequel l'entretoise tampon présente un module d'élasticité en compression de 0,1 à 10 MPa.

6. Procédé de fabrication de la plaque de guidage de lumière de diffraction selon la revendication 1, dans lequel la composition durcissable présente un taux de retrait au durcissement de 15 % ou moins.

7. Procédé de fabrication de la plaque de guidage de lumière de diffraction selon la revendication 1, dans lequel la composition durcissable contient un composé épisulfure et un composé thiol.

8. Procédé de fabrication de la plaque de guidage de lumière de diffraction selon la revendication 7, dans lequel la composition durcissable inclut en outre un composé isocyanate.

9. Procédé de fabrication de la plaque de guidage de lumière de diffraction selon la revendication 1,

dans lequel un gauchissement de la plaque de guidage de lumière par diffraction est de 100 $\mu$m ou moins, un trouble de la plaque de guidage de lumière par diffraction est de 4,0 % ou moins, et un écart d'épaisseur de la plaque de guidage de lumière par diffraction est de 3,0 % ou moins.

【FIG. 1】

【FIG. 2】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110019874 A1
- JP 2012068376 A